# EUROPEAN PATENT SPECIFICATION

(11) **EP 4 510 292 B1**
(45) Date of publication and mention of the grant of the patent: **14.10.2026**
(21) Application number: 23826308.1
(22) Date of filing: 16.06.2023
(51) Int. Cl.: H01M 10/42, H02J 7/00

(54) **BATTERY PACK**
BATTERIEPACK
BLOC-BATTERIE

(30) Priority: 23.06.2022 CN 202210719100; 23.06.2022 CN 202210719098
(43) Date of publication of application: 19.02.2025
(73) Proprietor: Nanjing Chervon Industry Co., Ltd., Nanjing, Jiangsu 211106 (CN)
(72) Inventor: GENG, Zheng, Nanjing, Jiangsu 211106 (CN); TONG, Jiajun, Nanjing, Jiangsu 211106 (CN); ZHANG, Jingru, Nanjing, Jiangsu 211106 (CN); LIU, Xiaopan, Nanjing, Jiangsu 211106 (CN)
(74) Representative: Sun, Yiming
(86) International application number: PCT/CN2023/100800
(87) International publication number: WO 2023/246659

(56) References cited:
- CN-A- 108 778 929
- CN-A- 112 087 007
- JP-A- 2007 109 444
- US-A1- 2018 277 801
- US-A1- 2021 044 122
- US-A1- 2022 060 039
- US-A1- 2022 085 346
- US-B2- 9 837 811

## Description

This application claims priority to Chinese Patent Application No. 202210719100.4 filed with the China National Intellectual Property Administration (CNIPA) on Jun. 23, 2022 and Chinese Patent Application No. 202210719098.0 filed with the CNIPA on Jun. 23, 2022.

### TECHNICAL FIELD

The present application relates to the technical field of energy storage, for example, a battery pack.

### BACKGROUND

Generally, a rechargeable battery pack powers a cordless power tool and can be charged through a charger. However, battery packs and chargers may not be updated synchronously, resulting in that a previous generation of chargers cannot charge a new generation of battery packs properly.

### SUMMARY

The present application provides a battery pack that is compatible with different chargers.

The present application adopts the technical solutions described below.

A battery pack includes: a cell group configured to store electrical energy; a power terminal configured to transmit power; and a communication terminal configured to transmit first communication data. The power terminal includes: a first power terminal capable of forming a first electrical connection with the cell group to transmit power; and a second power terminal capable of forming a second electrical connection with the cell group to transmit power and second communication data. The second power terminal is capable of transmitting the power and the second communication data in a time-division manner.

In an example, the battery pack further includes a first switch and a second switch, where the first switch and the second switch are connected in series between the second power terminal and the cell group.

In an example, the second electrical connection is enabled when the first switch is on, and the second electrical connection is not enabled when the first switch is off, where the power and the second communication data are capable of being inputted into the battery pack through the second power terminal when the second electrical connection is enabled, and the power is incapable of being inputted into the battery pack through the second power terminal when the second electrical connection is not enabled.

In an example, the battery pack further includes a communication module, where one end of the communication module is connected to the communication terminal and the second power terminal, and another end of the communication module is connected to a control unit; the control unit is configured to determine, according to the first communication data and/or the second communication data transmitted by the communication module, whether a charger connected to the battery pack has a charger terminal matched with the second power terminal; and in response to the charger connected to the battery pack having the charger terminal matched with the second power terminal, the first switch and the second switch are each controlled to be on so that the second electrical connection is enabled, otherwise the first switch is controlled to be off so that the second electrical connection is not enabled. The power and the second communication data are capable of being inputted into the battery pack through the second power terminal when the second electrical connection is enabled. The power is incapable of being inputted into the battery pack through the second power terminal when the second electrical connection is not enabled.

In an example, the communication module includes: a first communication module communicatively connected between the communication terminal and the control unit to acquire the first communication data; and a second communication module communicatively connected between the second power terminal and the control unit to acquire the second communication data.

In an example, the first switch includes one of a power switching element and a fuse.

In an example, the fuse includes a two-terminal fuse or a three-terminal fuse.

In an example, the second switch includes a power switching element.

In an example, the battery pack further includes: a bracket assembly for fixing the cell group; and sealing assemblies fixed on two end surfaces of the cell group and capable of sealing the two end surfaces of the cell group.

In an example, each of the sealing assemblies includes: a sealing sponge capable of being bonded on a respective one of the two end surfaces of the cell group; and a first circuit board mounted on the sealing sponge and capable of being fixedly connected to the bracket assembly, where the water absorbency of the sealing sponge is less than or equal to 2%, and the compressive strength of the sealing sponge is greater than or equal to 90 kPa.

In an example, the thickness of the sealing sponge is greater than or equal to 0.5 mm and less than or equal to 1 mm.

In an example, the first circuit board includes a double-sided circuit board with two sides on which electronic elements are capable of being welded.

In an example, each of the sealing assemblies includes: an insulator bonded on a respective one of the two end surfaces of the cell group; a second circuit board mounted on the insulator and capable of being fixedly connected to the bracket assembly; and a sealing cover plate covering the second circuit board to seal the respective one of the two end surfaces of the cell group.

In an example, a groove is formed at the inner edge of the sealing cover plate to accommodate a sealant liquid.

In an example, the second circuit board includes a single-sided circuit board with one side on which electronic elements are welded.

A battery pack includes: a cell group configured to store electrical energy; a power terminal configured to transmit power; and a communication terminal configured to transmit first communication data. The power terminal includes: a first power terminal forming a first electrical connection with the cell group to transmit power; and a second power terminal forming a second electrical connection with the cell group to transmit power and second communication data. The battery pack further includes a control unit electrically connected to at least the second power terminal and the communication terminal and capable of controlling the second electrical connection to be enabled or not.

A battery pack includes: a cell group configured to store electrical energy; a power terminal configured to transmit power; and a communication terminal configured to transmit first communication data. The power terminal includes: a first power terminal capable of forming a first electrical connection with the cell group to transmit power; and a second power terminal capable of forming a second electrical connection with the cell group to transmit power and second communication data. The ratio of the time during which the second power terminal transmits the power within one transmission period to the time during which the second power terminal transmits the second communication data within the transmission period is higher than or equal to 0.1 and lower than 1.

In an example, the battery pack further includes a first switch and a second switch, where the first switch and the second switch are connected in series between the second power terminal and the cell group.

In an example, when the second switch is off, the cell group is incapable of outputting the power to the second power terminal.

In an example, the battery pack further includes: a control circuit board electrically connected to the power terminal and the communication terminal and capable of performing discharging control or charging control; a terminal block disposed on a bracket assembly and configured to be capable of being mounted with the power terminal and the communication terminal; and a terminal sealing case connected to the terminal block. The control circuit board is completely accommodated in the terminal sealing case. The terminal sealing case is capable of being filled with a sealing material.

In an example, the sealing material includes a sealant.

### BRIEF DESCRIPTION OF DRAWINGS

FIG. 1 is a structural view of a battery pack in an example of the present application;
FIG. 2 is a structural view of a battery pack with a housing partially removed in an example of the present application;
FIG. 3 is a structural view showing cell groups and a bracket assembly in a battery pack in an example of the present application;
FIGS. 4a and 4b are example views showing the manners in which cells are arranged in a cell group in an example of the present application;
FIG. 5 is a schematic view of a structure connecting a housing to a bracket assembly in an example of the present application;
FIG. 6 is a structural view of a sealing assembly in an example of the present application;
FIG. 7 is a structural view of a sealing assembly in an example of the present application;
FIG. 8 is an exploded view of the sealing assembly in FIG. 7;
FIG. 9 is a structural view of a sealing cover plate in the sealing assembly in FIG. 7;
FIG. 10 is a structural view of terminals in a battery pack in an example of the present application;
FIG. 11 is a structural view of terminals in a battery pack in an example of the present application;
FIG. 12 is a schematic diagram showing the electrical connection between a battery pack and a charger in an example of the present application;
FIG. 13 is a schematic diagram of an internal circuit of a battery pack in an example of the present application;
FIG. 14 is a schematic diagram showing that a second power terminal transmits data and power in a time-division manner in an example of the present application;
FIG. 15 is a schematic diagram of an internal circuit of a battery pack in an example of the present application; and
FIG. 16 is a schematic diagram of an internal circuit of a battery pack in an example of the present application.

### DETAILED DESCRIPTION

The present application is described below in detail in conjunction with drawings and examples. It is to be understood that the examples described herein are intended to only illustrate the present application and not to limit the present application. Additionally, it is to be noted that for ease of description, only part, not all, of structures related to the present application are illustrated in the drawings.

In the description of the present application, it is to be understood that orientations or position relations indicated by terms such as "upper", "lower", "front", "rear", "left", "right", "vertical", "horizontal", "top", "bottom", "in", and "outside" are based on the drawings. These orientations or position relations are intended only to facilitate and simplify the description of the present application and not to indicate or imply that a device or element referred to must have such particular orientations or must be configured or operated in such particular orientations. Thus, these orientations or position relations are not to be construed as limiting the present application. Terms such as "first", "second", and "third" are used only for distinguishing description and are not to be construed as indicating or implying relative importance.

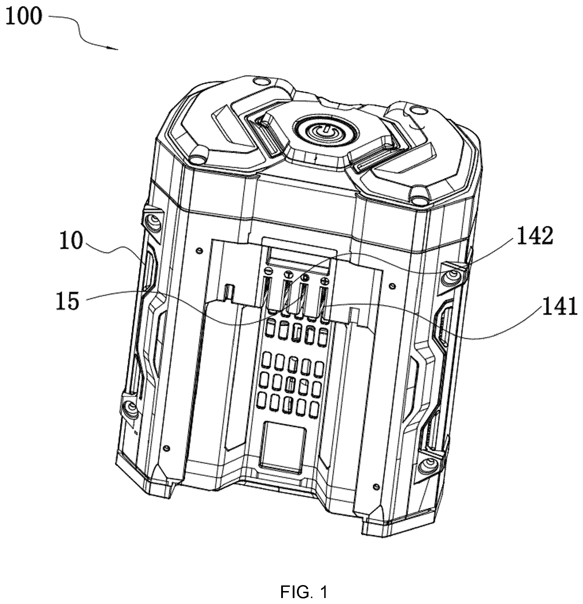

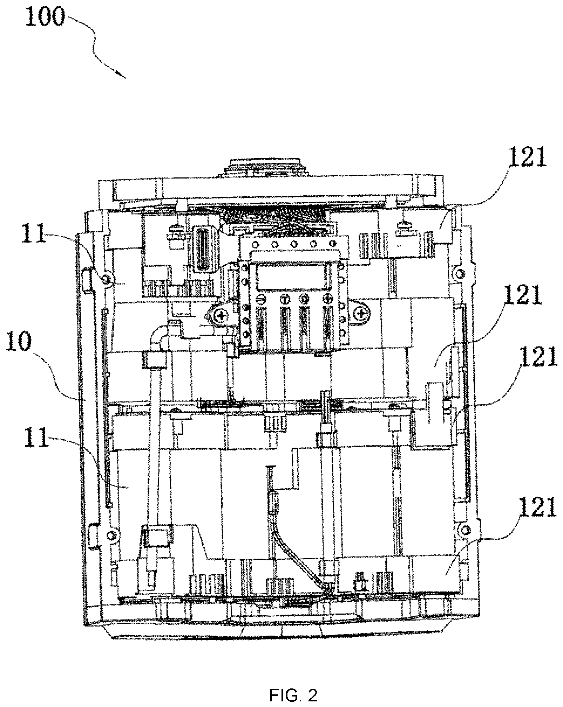

Referring to FIG. 1, a battery pack 100 mainly includes a housing 10 and at least one cell group 11 disposed in the housing 10. Each cell group 11 of the at least one cell group 11 is constituted by multiple cells 111 connected in series and/or in parallel. The cells 111 are connected in different manners. The rated voltage, power rating, or another electrical parameter of the battery pack 100 may be different. The manner in which the cells 111 are connected is not limited here. In this example, part of the cells 111 are connected in parallel and/or in series so that one cell unit can be constituted, and multiple cell units are connected in parallel and/or in series so that the cell group 11 is constituted. As shown in FIGS. 2 to 8, two cell groups 11 are disposed in the battery pack 100.

Referring to FIGS. 2 to 8, the battery pack 100 further includes a bracket assembly 12 supporting the cell groups 11. In this example, the bracket assembly 12 includes at least one pair of cell brackets 121. Each pair of cell brackets 121 can support two ends of a respective one of the cell groups 11. For example, the two cell groups 11 are disposed in the battery pack 100. Correspondingly, two pairs of cell brackets 121, that is, four cell brackets 121, may be disposed. As shown in FIG. 2, a cell bracket 121 supporting the upper end surface of one of the cell groups 11 and a cell bracket 121 supporting the lower end surface of the other one of the cell groups 11 may be fixed together in a physical connection manner such as screws. Thus, the two cell groups 11 can be stacked vertically. In another optional example, a side surface of one pair of cell brackets 121 supporting one of the cell groups 11 may be physically connected to a side surface of one pair of cell brackets 121 supporting the other one of the cell groups 11.

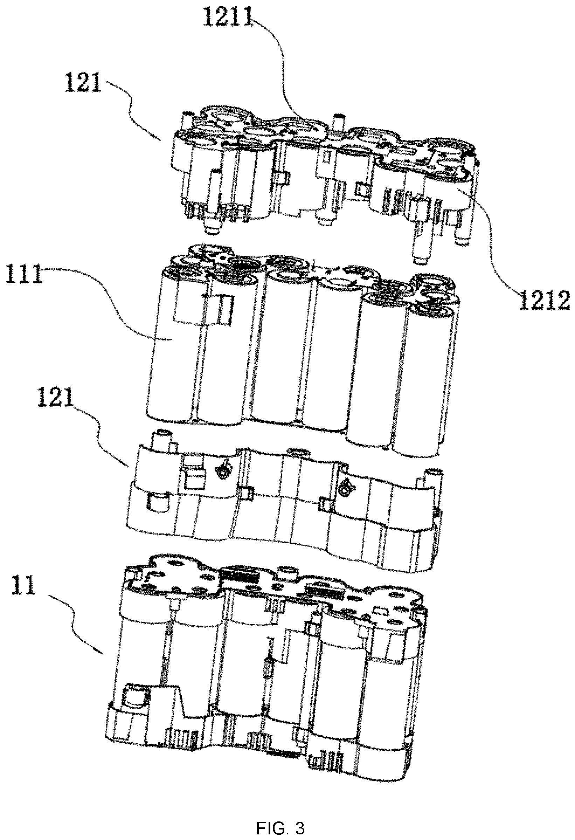

In this example, FIG. 3 is an exploded view showing part of structures of the battery pack, where each of the cell brackets 121 is similar to a cover or a tray and has a bracket end 1211 and a support wall 1212. The bracket end 1211 can support one of the two top ends of each of the cells 111. The support wall 1212 is used for fixing the circumferential sidewall of the cells 111. The bracket end 1211 has cellular openings. Each of the openings is used for accommodating one top end of one of the cells 111. Therefore, the shape of an orthographic projection of the bracket end 1211 in a plane parallel to the bracket end 1211 is related to the shape in which all the cells 111 are arranged in the cell group 11.

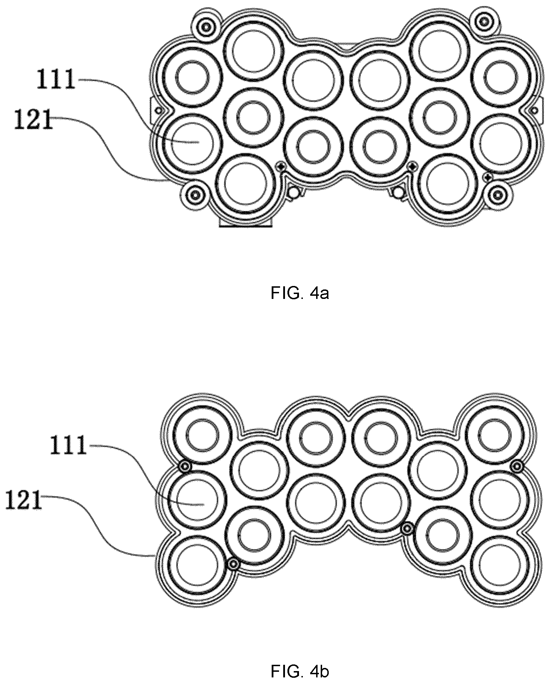

If the cells 111 are arranged in different shapes in the cell group 11, the battery pack 100 has different volumes. In addition, whether a phase change material is disposed in the cell group 11 also affects the volume of the battery pack. It is assumed that the battery pack 100 has the two cell groups 11 that are stacked vertically, each of the two cell groups 11 includes 14 cells 111, and the cells 111 are circumferentially wrapped with the phase change material. If the 14 cells are arranged as shown in FIG. 4a, the volume of the battery pack 100 is 156*109*195 mm3. If the 14 cells are staggered as shown in FIG. 4b, the volume of the battery pack 100 is 154*99*195 mm3. If no phase change material is disposed around the preceding cells 111, the volume of the battery pack 11 is reduced. To obtain a smaller battery pack, the cells 111 in the cell group 11 may be staggered or arranged in another form in conjunction with the staggered arrangement, which is not described in detail here. Any other solutions that the manner in which the cells 111 are arranged is changed so that the volume of the battery pack 100 is reduced fall within the scope of the present application.

In this example, the bracket end 1211 and the top end of all the cells 111 accommodated in the bracket end 1211 collectively form one end surface of the cell group 11.

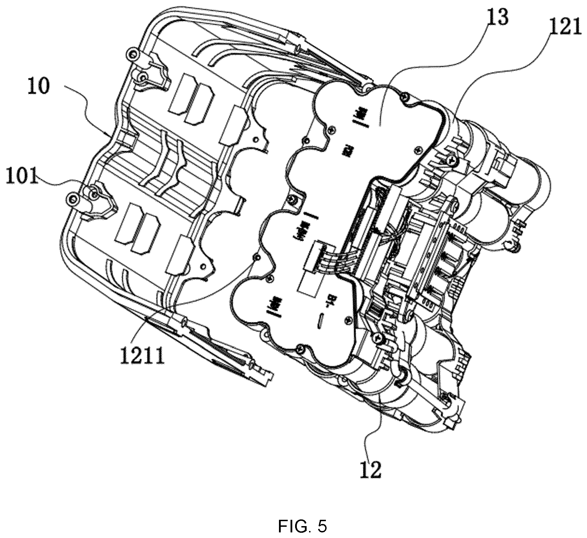

In this example, the cell brackets 121 may be fixed together with the housing 10 to prevent the cell groups 11 from shaking in the housing 10. In an example, as shown in FIG. 5, an end surface of one of the cell brackets 121 may be provided with screw holes 1211. The cell brackets 121 are fixed to the housing 10 through screws. In an example, the cell brackets 121 may have side surfaces provided with the screw holes to be fixedly connected to the housing 10. In an example, screws for fixing the housing 10 may be used for penetrating through or halfway penetrating into the cell brackets 121 to fix the cell brackets 121. In this example, the number and positions of the screw holes 1211 on the cell brackets 121 are not limited.

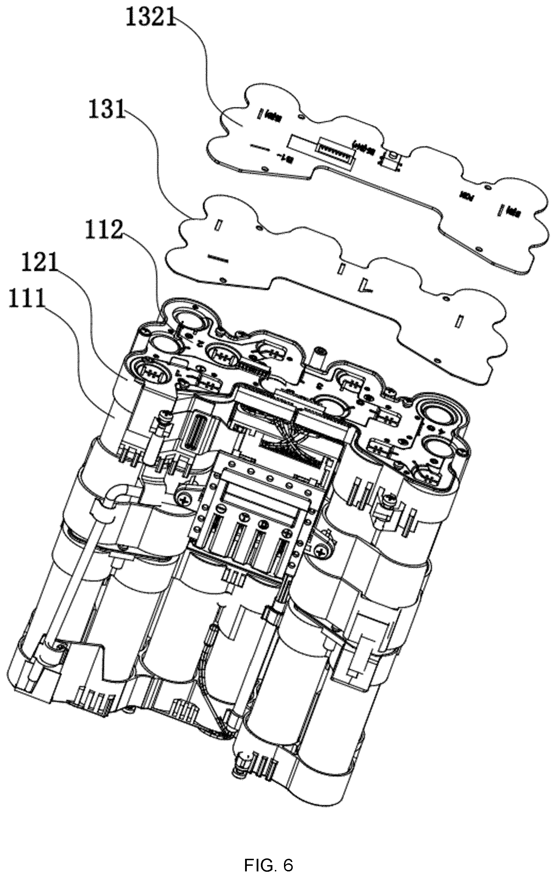

Referring to FIG. 6, cell connecting pieces 112 for each electrically connecting at least two cells 111 into a cell unit are disposed on two end surfaces of each cell group 11. Cell connecting pieces 112 of different cell units cannot be electrically connected to each other, otherwise short circuits may be caused in cells. For example, conductive dust in a production workshop can cause different cell connecting pieces 112 to be electrically connected to each other, or water may accidentally enter the battery pack 100 during use, which may cause different cell connecting pieces 112 to be electrically connected to each other. Generally, insulating paper may be bonded on the two end surfaces of the cell group 11. However, the insulating paper cannot prevent a conductive liquid from penetrating into the end surfaces of the cell group 11 from the periphery of the insulating paper, thereby causing the cell connecting pieces 112 to be short-circuited.

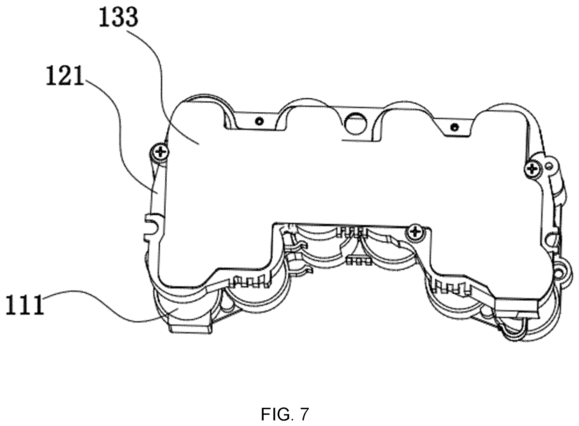

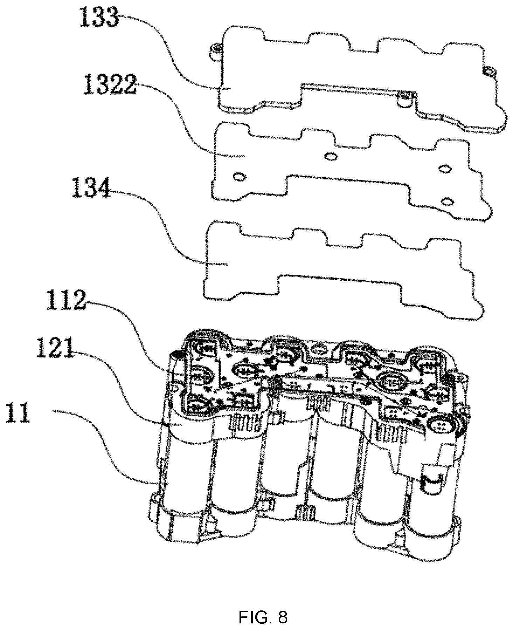

In this example, referring to FIGS. 7 and 8, sealing assemblies 13 are disposed on the two end surfaces of the cell group 11. The sealing assemblies 13 can be fixed on the two end surfaces of the cell assembly 11. The sealing assemblies 13 can lead out the cell connecting pieces 112 and form sealing spaces with the end surfaces of the cell group 11. Each of the sealing spaces may have a certain gap or may be filled with a sealed solid object. The sealing assemblies 13 lead out the cell connecting pieces 112, which may refer to that the cell connecting pieces 112 are partially exposed outside the sealing assemblies 13, or after being connected to other conductive lines, the cell connecting pieces 112 are conductive outside the sealing assemblies 13, but all the cell connecting pieces 112 are located in the preceding sealing spaces.

In an example, as shown in FIG. 7, each of the sealing assemblies 13 includes a sealing sponge 131 and a first circuit board 1321. One side of the sealing sponge 131 is viscous and can be bonded on one of the end surfaces of the cell group 11. The first circuit board 1321 is disposed on the sealing sponge 131. Generally, the first circuit board 1321 may be fixed on one of the cell brackets 121 through screws so that the first circuit board 1321 can press the sealing sponge 131 tightly. The sealing sponge 131 has a certain thickness. Therefore, when the sealing sponge 131 is fastened between the first circuit board 1321 and the end surface of the cell group 11, the sealing sponge 131 can be completely bonded on the cell bracket 121, thereby forming the sealing space between the first circuit board 1321 and the end surface of the cell group 11.

In this example, the sealing sponge 131 can cover at least cell connecting pieces 112 on the end surface of the cell group 11.

In this example, the cell connecting pieces 112 on the end surface of the cell group 11 have protrusions or protruding connecting ends 1121. The connecting ends 1121 can penetrate through the sealing sponge 131. The first circuit board 1321 is provided with connecting holes 1321 whose shapes are adaptable to the shapes of the connecting ends 1121 so that the connecting ends 1121 can be welded on the first circuit board 1321. In this example, the first circuit board 1321 is integrated with integrated connecting ends 1322 corresponding to the cell connecting pieces 112. In this example, a sensor that can collect electrical parameters of the cell units or electrical parameters of the cells 111 may also be disposed on the side of the first circuit board 1321 in contact with the sealing sponge 131. That is to say, the first circuit board 1321 may be a double-sided circuit board. That is, electronic elements can be welded on both sides of the circuit board.

In an optional example, two double-sided circuit boards may be fixed at two ends of one of the cell groups 11 one to one, or a double-sided circuit board may be fixed at one end of one of the cell groups 11 and a single-sided circuit board may be fixed at the other end of the cell group 11. The single-sided circuit board refers to a circuit board with only one side on which electronic elements can be welded.

In this example, the thickness of the sealing sponge 131 is greater than or equal to 0.5 mm and less than or equal to 1 mm. For example, the thickness of the sealing sponge 131 may be 0.5 mm, 0.6 mm, 0.7 mm, 0.8 mm, 0.9 mm, or 1 mm.

In an example, a sealing sponge 131 bonded to each end surface of the cell group 11 may have a different thickness. For example, the thickness of a sealing sponge 131 under the double-sided circuit board is less than the thickness of a sealing sponge 131 under the single-sided circuit board. Thus, the following case can be avoided that the sensor on the back of the first circuit board 1321 is affected in the detection of electrical parameters of the cell group 11 by a relatively thick sealing sponge 131.

In this example, the water absorbency of the sealing sponge 131 is less than or equal to 2%. For example, the water absorbency of the sealing sponge 131 is 1.5%, 1.2%, 1%, or 0.5%. The compressive strength of the sealing sponge 131 is greater than or equal to 90 kPa. For example, the compressive strength of the sealing sponge 131 may be 95 kPa, 96 kPa, 97 kPa, 98 kPa, 99 kPa, or 100 kPa.

In another example, as shown in FIG. 8, each of the sealing assemblies 13 may also include a sealing cover plate 133. The sealing cover plate 133 may be fixed on one of the cell brackets 121 through screws. In this example, a groove 1331 is provided at the lower edge of the sealing cover plate 133. After a sealing material is injected into the groove 1331, the end surface of the cell group 11 is covered with the sealing cover plate 133 so that a sealing space can be formed between the end surface of the cell group 11 and the sealing cover plate 133. The gap at the joint between the sealing end cover 133 and the cell bracket 121 can be completely sealed by the sealant in the groove 1331. In this example, the sealing material may be a sealant. In the description of this example, the same constituent of the battery pack 100 is denoted by the same reference numeral or a corresponding reference numeral and is not described in detail.

In this example, a second circuit board 1322 is also disposed on the end surface of the cell group 11. The second circuit board 1322 may be a single-sided circuit board. The sealing cover plate 133 seals the second circuit board 1322 on the end surface of the cell group 11. The second circuit board 1322 is connected to the cell connecting pieces 112 through a connecting wire. The connecting wire can extend out of the sealing end cover 133 to avoid being sealed inside the end cover by the sealing end cover 133.

In this example, insulators 133 are also disposed on the end surfaces of the cell group 11. In an example, the insulators 133 can be bonded on the end surfaces of the cell group 11 or can cover at least the insulating paper 133 of the cell connecting pieces 112 on the end surfaces, and second circuit boards 1322 can completely cover the insulating paper or completely cover the two end surfaces of the cell group 11.

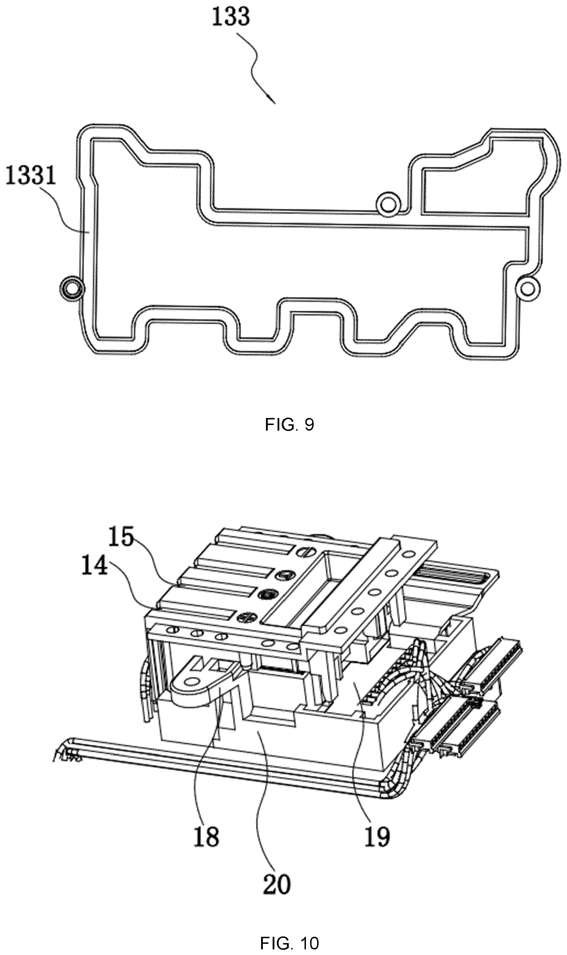

In an example, as shown in FIG. 9, the battery pack 100 also includes a power terminal 14, a communication terminal 15, a terminal block 18, and a control circuit board 19. The power terminal 14 and the communication terminal 15 are mounted on the terminal block 18 and electrically connected to the control circuit board 19. The battery pack 100 also includes a terminal sealing case 20 connected to the terminal block 18. The control circuit board 19 is disposed between the terminal sealing case 20 and the terminal block 18. A sealing material is poured into the terminal sealing case 20 so that the control circuit board 19 can be sealed in the terminal sealing case 20. In this example, the sealing material may be a sealant. The control circuit board 19 in the terminal sealing case 20 and electronic elements on the control circuit board 19 can be completely sealed by the sealing material.

Referring to FIG. 1, the cell groups 11 may be electrically connected to the power terminal 14 disposed outside the housing 10. Thus, after a charger terminal on a charger is electrically connected to the power terminal 14, the power terminal 14 can transmit power from the charger to the cell groups 11 to charge the battery pack 100. Alternatively, after a tool connecting terminal on a power tool is connected to the power terminal 14, the battery pack 100 can power the power tool. The communication terminal 15 may transmit first communication data between the battery pack 100 and the charger or transmit first communication data between the battery pack 100 and the power tool.

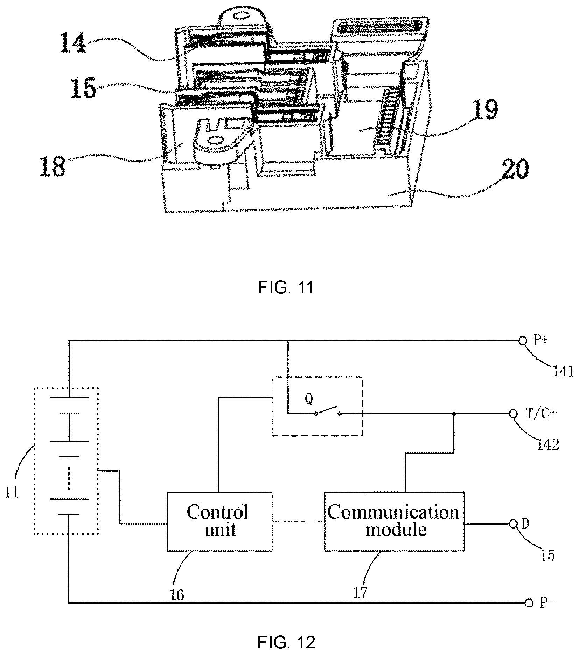

Referring to FIG. 12, in the battery pack 100, the power terminal 14 includes a first power terminal 141 and a second power terminal 142. The first power terminal 141 can form a first electrical connection with the cell groups 11 to transmit power. The second power terminal 142 can form a second electrical connection with the cell groups 11 to transmit power and second communication data. The first power terminal 141 and the second power terminal 142 may be positive terminals in a current loop. For example, the first power terminal 141 may be P+, and the second power terminal 142 may be T/C+. That is to say, the second power terminal 142 is a terminal having the functions of transmitting the power and the communication data.

In this example, the data types or data attributes of the first communication data and the second communication data may be the same or different. In an example, the first communication data may be control data, for example, a control signal for controlling a discharging parameter of the charger, a control signal for controlling a conduction state of a switching element, or a control signal for controlling a charging/discharging parameter of the cell group 11. The second communication data may be a state parameter of a working state of the charger, the battery pack, or the power tool, various electrical parameters, or the like. In an example, the transmission frequency with which the communication terminal 15 transmits the first communication data is different from the transmission frequency with which the second power terminal 142 transmits the second communication data. In an example, the transmission frequency with which the communication terminal 15 transmits the first communication data is lower than the transmission frequency with which the second power terminal 142 transmits the second communication data.

The battery pack 100 shown in FIG. 12 may also include a control unit 16. The control unit 16 can be electrically connected to at least the second power terminal 142 and the communication terminal 15 in a control circuit in the battery pack 100 and can control the second electrical connection to be enabled or not. In this example, the second electrical connection is enabled, which refers to that the charger can charge the cell groups 11 through the second power terminal 142, and the second electrical connection is not enabled, which refers to that the cell groups 11 cannot be charged, through the second power terminal 142, with electrical energy outputted by the charger. That is to say, whether the second electrical connection is enabled or not is related to whether the cell groups 11 can be charged with the electrical energy through the second power terminal 142. Even if the path is free on which the electrical energy is outputted to the second power terminal 142 from the cell groups 11, it is still considered that the second electrical connection is not enabled if the path is blocked on which the electrical energy is inputted through the second power terminal 142 and the cell groups 11 are charged with the electrical energy.

In this example, as shown in FIG. 12, a switching element Q is connected between the second power terminal 142 and the cell groups 11. The control unit 16 may control, by controlling a conduction state of the switching element Q, the second electrical connection to be enabled or not.

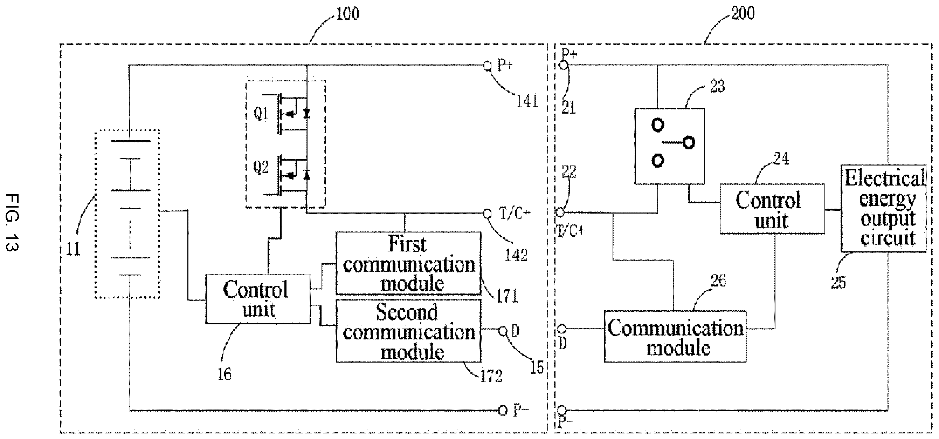

In this example, the first electrical connection may not be controlled by the control unit 16. That is to say, the first power terminal 141 and the cell groups 11 may be directly connected to each other through a wire. In an example, a switching element may be disposed in the charger so that a charger power terminal in the charger connected to the power terminal 14 of the battery pack 100 is controlled to be capable of outputting the electrical energy or not. For example, as shown in FIG. 13, a relay 23 may be disposed between an electrical energy output circuit 25 and a charger power terminal 22 in a charger 200. A conduction state of the relay 23 is controlled through the control unit 16 in the battery pack 100 or a control unit 24 in the charger 200 so that the charger power terminal 22 or a charger power terminal 21 is controlled to output the electrical energy. The electrical energy output circuit 25 may be a circuit that can convert utility power into charging electrical energy with which the battery pack 100 can be charged.

Referring to FIG. 13, switching elements are connected in series between the second power terminal 142 and the cell groups 11, that is, a first switch Q1 and a second switch Q2. In an example, the first switch Q1 and the second switch Q2 are controllable semiconductor power devices (for example, field-effect transistors (FETs), bipolar junction transistors (BJTs), or insulated-gate bipolar transistors (IGBTs)). In an example, the first switch Q1 and the second switch Q2 may be any other types of solid-state switches, for example, insulated-gate bipolar transistors (IGBTs) or bipolar junction transistors (BJTs).

In this example, the control unit 16 may control conduction states of the first switch Q1 and the second switch Q2 to control the second electrical connection to be enabled or not. For example, the second electrical connection is enabled when the first switch Q1 is on and the second switch Q2 is on or off, and the second electrical connection is not enabled when the first switch Q1 is not on and the second switch Q2 is on or off. The conduction state of the first switch Q1 is related to whether the cell groups 11 can be charged with the electrical energy inputted through the second power terminal 142. That is, when the first switch Q1 is on, it is considered that the second electrical connection is enabled regardless of whether the second switch Q2 is on.

It may be considered that a conduction state of the second switch Q2 does not affect the enablement of the second electrical connection. However, when the first switch Q1 is on and the second switch Q2 is not on, the electrical energy used by the charger 200 to charge the cell groups 11 through the second power terminal 142 is lost to a certain extent. Optionally, the control unit 16 may control the first switch Q1 and the second switch Q2 to be on so that the second electrical connection is enabled, and the second power terminal 142 is used as a charging power terminal.

In addition, the conduction state of the second switch Q2 is related to whether an instantaneous reverse current generated by the battery pack 100 can be transmitted to the charger through the second power terminal 142. That is to say, the control unit 16 can prevent, by controlling the conduction state of the second switch Q2, the charger or the tool from being damaged by an instantaneous high current generated when the battery pack 100 is connected to the charger. For example, when the charger 200 connected to the battery pack 100 has no charger terminal matched with the second power terminal 142, the instantaneous high reverse current generated by the battery pack 100 flows through the first switch Q1 and the second switch Q2 and then impacts the charger terminal, damaging the charger if the second switch Q2 is in the on state. Therefore, when the charger 200 connected to the battery pack 100 has no charger terminal matched with the second power terminal 142, the control unit 16 may control the second switch Q2 to be off to prevent the charger from being damaged due to a mismatch between the battery pack 100 and the charger 200. That is to say, even if the conduction state of the second switch Q2 does not affect the enablement of the second electrical connection, it is necessary to dispose the second switch Q2 between the second power terminal 142 and the cell groups 11 to prevent the tool or the charger from being damaged by the instantaneous high current outputted by the cell groups 11.

In this example, the control unit 16 may control the first switch Q1 to be on or off and may also control the second switch Q2 to be on or off. Alternatively, the control unit 16 can control the first switch Q1 to be on or off, and the second switch Q2 may be initialized to be in the off state, is not controlled by the control unit 16, and remains off. In this example, even if the second switch Q2 remains off, the power also can flow through the first switch Q1 through the body diode of the second switch Q2 and then the cell groups 11 are charged with the power when the second electrical connection is enabled. In addition, at the moment when the battery pack 100 is connected to the charger, an instantaneous current which is relatively high may exist and is reversely transmitted to the charger through the second power terminal 142. As a result, the charger is damaged.

In this example, the power and the second communication data can be inputted into the battery pack 100 through the second power terminal 142 when the second electrical connection is enabled. Specifically, the power outputted by the charger passes through the second power terminal 142 and then flows through a second circuit of the second electrical connection and then the cell groups 11 are charged with the power, and data interaction can be performed on the second communication data in the battery pack 100 or the second communication data in the charger through the second power terminal 142.

Referring to FIG. 12, the battery pack 100 may also include a communication module 17. In an example, one end of the communication module 17 may be connected to the communication terminal 15 and the second power terminal 142, and another end of the communication module 17 is connected to the control unit 16. Thus, the communication module 17 transmits the first communication data from the communication terminal 15 and the second communication data from the second power terminal 142 to the control unit 16. The control unit 16 may identify, according to the received communication data, whether the charger 200 currently connected to the battery pack 100 has a charger terminal matched with the second power terminal 142. For example, the first communication data/the second communication data may include the information with which it can be determined whether the charger has a terminal with both charging and communication capabilities, for example, the model or hardware configuration of the charger. That is to say, whether the charger terminal connected to the second power terminal 142 has the capability to transmit the power and the communication data may be used as a basis for determining whether the charger 200 has the charger terminal matched with the second power terminal 142.

In this example, a communication module 26 in the charger 200 may also be provided with two communication sub-modules like the communication module 17 in the battery pack 100, which is not described in detail in the present application.

In this example, before the battery pack 100 is connected to the charger 200, the initial states of the two switches connected between the second power terminal 142 and the cell groups 11 are each the off states. When the battery pack 100 is connected to the charger 200, the communication terminal 15 can transmit the first communication data between the charger and the battery pack 100, and the control unit 16 may identify the type of the charger based on the received communication data, that is, the control unit 16 may determine whether the charger 200 has the charger terminal matched with the second power terminal 142. If detecting that the charger 200 connected to the battery pack 100 has the charger terminal matched with the second power terminal 142, the control unit 16 may control the first switch Q1 and the second switch Q2 to be on so that the second electrical connection is enabled and the charger 200 can charge the battery pack 100. On the contrary, if detecting that the charger 200 connected to the battery pack 100 has no charger terminal matched with the second power terminal 142, the control unit 16 controls the first switch Q1 to be off so that the second electrical connection is not enabled and the charger 200 cannot charge the battery pack through the second power terminal 142.

In this example, the second communication data received by the second power terminal 142 is transmitted to the control unit 16 through the communication module 17, and the power passes through the second switch Q2 and the first switch Q1 and then is transmitted to the cell groups 11. Therefore, the second power terminal 142 transmits the power and the second communication data on different paths. If the second electrical connection is not enabled, the second power terminal 142 transmits only the second communication data through the communication unit 17. If the second electrical connection is enabled, the second power terminal 142 can transmit the power through the current path where the two switches are located and transmit the second communication data through the communication module 17 at the same time.

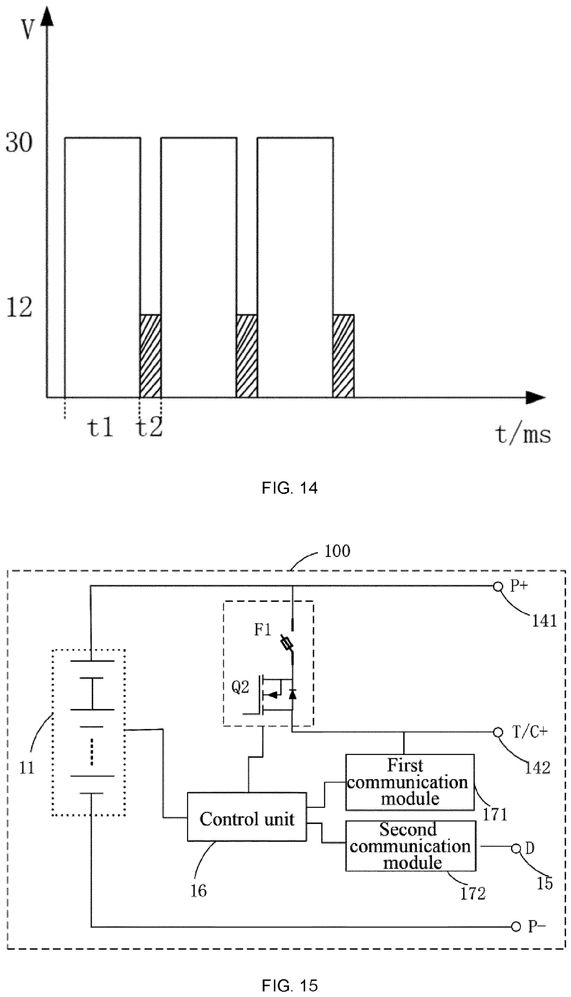

In an example, the second power terminal 142 may transmit the power and the second communication data in a time-division manner. The so-called time-division transmission may be considered as only transmitting the power for a period of time and only transmitting the second communication data for a period of time. As shown in FIG. 14, within one transmission period, the second power terminal 142 may transmit the power for a first duration t1 and then transmit the second communication data for a second duration t2. The ratio of the first duration t1 to the second duration t2 is higher than or equal to 0.1 and lower than 1. For example, the ratio of the first duration t1 to the second duration t2 is 0.1, 0.2, 0.3, 0.4, 0.5, 0.6, 0.7, 0.8, or 0.9. In FIG. 4, when the second power terminal 142 transmits the power, the voltage between the terminal and the ground is approximately 30 V, and when the second power terminal 142 transmits the second communication data, the voltage between the second power terminal 142 and the ground is approximately 14 V. In this example, the control unit 16 may preset the first duration and the second duration. It is to be understood that in the process where the power and the second communication data are transmitted in a time-division manner, the second electrical connection may be constantly enabled or may be disabled during the period of time when the second power terminal 142 transmits the second communication data. The second electrical connection may be constantly enabled in the process where the power and the second communication data are transmitted in a time-division manner so that the second electrical connection is prevented from being enabled and disabled frequently.

In an example, as shown in FIG. 13, the communication module 17 may include a first communication module 171 and a second communication module 172. The first communication module 171 is communicatively connected between the communication terminal 15 and the control unit 16 to acquire the first communication data. The second communication module 172 is communicatively connected between the second power terminal 142 and the control unit 16 to acquire the second communication data.

In an example, the first switch Q1 may be a two-terminal fuse F1 shown in FIG. 15. When detecting that the charger 200 has no charger terminal matched with the second power terminal 142, the control unit 16 may control the two-terminal fuse F1 to blow so that the second electrical connection is not enabled.

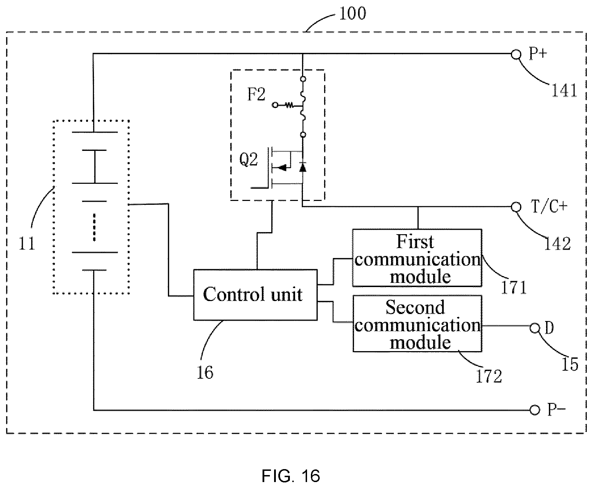

In an example, the first switch Q1 may be a three-terminal fuse F2 shown in FIG. 16. When detecting that the charger 200 has no charger terminal matched with the second power terminal 142, the control unit 16 may control the three-terminal fuse F2 to blow so that the second electrical connection is disabled. Alternatively, when the voltage or current of any cell group 11 exceeds a set value, the control unit 16 may control the three-terminal fuse F2 to blow to disable the second electrical connection, thereby implementing overcurrent or overvoltage protection for the cell group 11.

In the example of the present application, a communication terminal of the battery pack also has the function of transmitting the power, or a power terminal of the battery pack also has the function of transmitting the communication data so that the battery pack is compatible with different types of chargers.

The example of the present application only shows that the adaptability of the power terminal can be detected when the battery pack is connected to the charger to be charged. When the battery pack is connected to the power tool to power it, it may also be determined, with the preceding method, whether the tool has a tool terminal that can both communicate and transmit the power, which is not described in detail in the present application.

## Claims

1. A battery pack (100) for a power tool, comprising:
a cell group (11) configured to store electrical energy;
a power terminal (14) configured to transmit power; and
a communication terminal (15) configured to transmit first communication data;
**characterized in that** the power terminal comprises:
a first power terminal (141) capable of forming a first electrical connection with the cell group to transmit power; and
a second power terminal (142) capable of forming a second electrical connection with the cell group to transmit power and second communication data;
the battery pack further comprising
a control unit (16) electrically connected to at least the second power terminal and the communication terminal and capable of controlling the second electrical connection to be enabled or not; and
a communication module (17) having one end connected to the communication terminal (15) and the second power terminal (142), and another end connected to the control unit (16);
wherein the second power terminal is configured to be capable of transmitting the power and the second communication data in a time-division manner; and
the control unit is configured to determine, according to the first communication data and/or the second communication data, whether a charger or the power tool connected to the battery pack has a terminal with both charging and communication capabilities.

2. The battery pack according to claim 1, further comprising a first switch (Q1) and a second switch (Q2), wherein the first switch and the second switch are connected in series between the second power terminal and the cell group.

3. The battery pack according to claim 2, wherein the second electrical connection is enabled when the first switch is on, and the second electrical connection is not enabled when the first switch is off, wherein the power and the second communication data are capable of being inputted into the battery pack through the second power terminal when the second electrical connection is enabled, and the power is incapable of being inputted into the battery pack through the second power terminal when the second electrical connection is not enabled.

4. The battery pack according to claim 2, wherein the control unit is configured to determine, according to the first communication data and/or the second communication data transmitted by the communication module, whether a charger connected to the battery pack has a charger terminal matched with the second power terminal; and in response to the charger connected to the battery pack having the charger terminal matched with the second power terminal, the first switch and the second switch are each controlled to be on so that the second electrical connection is enabled, otherwise the first switch is controlled to be off so that the second electrical connection is not enabled, wherein the power and the second communication data are capable of being inputted into the battery pack through the second power terminal when the second electrical connection is enabled, and the power is incapable of being inputted into the battery pack through the second power terminal when the second electrical connection is not enabled.

5. The battery pack according to claim 4, wherein the communication module comprises: a first communication module (171) communicatively connected between the communication terminal and the control unit to acquire the first communication data; and a second communication module (172) communicatively connected between the second power terminal and the control unit to acquire the second communication data.

6. The battery pack according to claim 2, wherein the first switch comprises one of a power switching element and a fuse.

7. The battery pack according to claim 6, wherein the fuse comprises a two-terminal fuse or a three-terminal fuse.

8. The battery pack according to claim 2, wherein the second switch comprises a power switching element.

9. The battery pack according to claim 1, wherein the first power terminal and the second power terminal are positive terminals.

10. The battery pack according to claim 1, wherein the battery pack powers a power tool when a tool connecting terminal on the power tool is connected to the power terminal.

11. The battery pack according to claim 1, wherein the transmission frequency with which the communication terminal transmits the first communication data is lower than the transmission frequency with which the second power terminal transmits the second communication data.

12. The battery pack according to claim 1, wherein the second power terminal transmits only the second communication data when the second electrical connection is not enabled, and the second power terminal transmits the power and the second communication data when the second electrical connection is enabled.

13. The battery pack according to claim 1, wherein within one transmission period, the second power terminal transmits the power for a first duration t1 and then transmits the second communication data for a second duration t2, and a ratio of the first duration t1 to the second duration t2 is higher than or equal to 0.1 and lower than 1.

## Patentansprüche

1. Batteriepack (100) für ein Elektrowerkzeug, umfassend:
eine Zellengruppe (11), die eingerichtet ist, elektrische Energie zu speichern;
einen Leistungsanschluss (14), der eingerichtet ist, Leistung zu übertragen; und
einen Kommunikationsanschluss (15), der eingerichtet ist, erste Kommunikationsdaten zu übertragen;
**dadurch gekennzeichnet, dass** der Leistungsanschluss Folgendes umfasst:
einen ersten Leistungsanschluss (141), der eine erste elektrische Verbindung mit der Zellengruppe herstellen kann, um Leistung zu übertragen; und
einen zweiten Leistungsanschluss (142), der eine zweite elektrische Verbindung mit der Zellengruppe herstellen kann, um Leistung und zweite Kommunikationsdaten zu übertragen;
wobei der Batteriepack ferner Folgendes umfasst
eine Steuereinheit (16), die elektrisch mit mindestens dem zweiten Leistungsanschluss und dem Kommunikationsanschluss verbunden ist und steuern kann, ob die zweite elektrische Verbindung aktiviert wird oder nicht; und
ein Kommunikationsmodul (17), das ein Ende, das mit dem Kommunikationsanschluss (15) und dem zweiten Leistungsanschluss (142) verbunden ist, und ein anderes Ende, das mit der Steuereinheit (16) verbunden ist, aufweist;
wobei der zweite Leistungsanschluss eingerichtet ist, die Leistung und die zweiten Kommunikationsdaten im Zeitmultiplexverfahren übertragen zu können; und
die Steuereinheit eingerichtet ist, anhand der ersten Kommunikationsdaten und/oder der zweiten Kommunikationsdaten zu bestimmen, ob ein Ladegerät oder das Elektrowerkzeug, das mit dem Batteriepack verbunden ist, einen Anschluss mit sowohl Lade- als auch Kommunikationsfähigkeiten aufweist.

2. Batteriepack nach Anspruch 1, ferner umfassend einen ersten Schalter (Q1) und einen zweiten Schalter (Q2), wobei der erste Schalter und der zweite Schalter zwischen dem zweiten Leistungsanschluss und der Zellengruppe in Reihe geschaltet sind.

3. Batteriepack nach Anspruch 2, wobei die zweite elektrische Verbindung aktiviert ist, wenn der erste Schalter eingeschaltet ist, und die zweite elektrische Verbindung nicht aktiviert ist, wenn der erste Schalter ausgeschaltet ist, wobei die Leistung und die zweiten Kommunikationsdaten über den zweiten Leistungsanschluss in den Batteriepack eingespeist werden können, wenn die zweite elektrische Verbindung aktiviert ist, und die Leistung nicht über den zweiten Leistungsanschluss in den Batteriepack eingespeist werden kann, wenn die zweite elektrische Verbindung nicht aktiviert ist.

4. Batteriepack nach Anspruch 2, wobei die Steuereinheit eingerichtet ist, anhand der ersten Kommunikationsdaten und/oder der zweiten Kommunikationsdaten, die von dem Kommunikationsmodul übertragen werden, zu bestimmen, ob ein mit dem Batteriepack verbundenes Ladegerät einen auf den zweiten Leistungsanschluss abgestimmten Ladegerätanschluss aufweist; und als Reaktion darauf, dass das mit dem Batteriepack verbundene Ladegerät den auf den zweiten Leistungsanschluss abgestimmten Ladegerätanschluss aufweist, der erste Schalter und der zweite Schalter jeweils zum Einschalten angesteuert werden, sodass die zweite elektrische Verbindung aktiviert wird, andernfalls der erste Schalter zum Ausschalten angesteuert wird, sodass die zweite elektrische Verbindung nicht aktiviert wird, wobei die Leistung und die zweiten Kommunikationsdaten über den zweiten Leistungsanschluss in den Batteriepack eingespeist werden können, wenn die zweite elektrische Verbindung aktiviert ist, und die Leistung nicht über den zweiten Leistungsanschluss in den Batteriepack eingespeist werden kann, wenn die zweite elektrische Verbindung nicht aktiviert ist.

5. Batteriepack nach Anspruch 4, wobei das Kommunikationsmodul Folgendes umfasst: ein erstes Kommunikationsmodul (171), das zur Kommunikation zwischen dem Kommunikationsanschluss und der Steuereinheit verbunden ist, um die ersten Kommunikationsdaten zu erfassen; und ein zweites Kommunikationsmodul (172), das zur Kommunikation zwischen dem zweiten Leistungsanschluss und der Steuereinheit verbunden ist, um die zweiten Kommunikationsdaten zu erfassen.

6. Batteriepack nach Anspruch 2, wobei der erste Schalter entweder ein Leistungsschaltelement oder eine Sicherung umfasst.

7. Batteriepack nach Anspruch 6, wobei die Sicherung eine Sicherung mit zwei Anschlüssen oder eine Sicherung mit drei Anschlüssen umfasst.

8. Batteriepack nach Anspruch 2, wobei der zweite Schalter ein Leistungsschaltelement umfasst.

9. Batteriepack nach Anspruch 1, wobei der erste Leistungsanschluss und der zweite Leistungsanschluss Plusanschlüsse sind.

10. Batteriepack nach Anspruch 1, wobei der Batteriepack ein Elektrowerkzeug mit Leistung versorgt, wenn ein Werkzeuganschluss am Elektrowerkzeug mit dem Leistungsanschluss verbunden ist.

11. Batteriepack nach Anspruch 1, wobei die Übertragungsfrequenz, mit der der Kommunikationsanschluss die ersten Kommunikationsdaten überträgt, niedriger ist als die Übertragungsfrequenz, mit der der zweite Leistungsanschluss die zweiten Kommunikationsdaten überträgt.

12. Batteriepack nach Anspruch 1, wobei der zweite Leistungsanschluss nur die zweiten Kommunikationsdaten überträgt, wenn die zweite elektrische Verbindung nicht aktiviert ist, und der zweite Leistungsanschluss die Leistung und die zweiten Kommunikationsdaten überträgt, wenn die zweite elektrische Verbindung aktiviert ist.

13. Batteriepack nach Anspruch 1, wobei innerhalb einer Übertragungsperiode der zweite Leistungsanschluss die Leistung während einer ersten Dauer t1 überträgt und anschließend die zweiten Kommunikationsdaten während einer zweiten Dauer t2 überträgt, und ein Verhältnis der ersten Dauer t1 zu der zweiten Dauer t2 größer als oder gleich 0.1 und kleiner als 1 ist.

## Revendications

1. Bloc-batterie (100) pour un outil électrique, comprenant :
un groupe de cellules (11) configuré pour stocker de l'énergie électrique ;
une borne de puissance (14) configurée pour transmettre de la puissance ; et
une borne de communication (15) configurée pour transmettre de premières données de communication ;
**caractérisé en ce que** la borne de puissance comprend :
une première borne de puissance (141) apte à établir une première connexion électrique avec le groupe de cellules pour transmettre de la puissance ; et
une deuxième borne de puissance (142) apte à établir une deuxième connexion électrique avec le groupe de cellules pour transmettre de la puissance et de deuxièmes données de communication ;
le bloc-batterie comprenant en outre
une unité de commande (16) connectée électriquement au moins à la deuxième borne de puissance et à la borne de communication et apte à commander l'activation ou la non-activation de la deuxième connexion électrique ; et
un module de communication (17) ayant une extrémité connectée à la borne de communication (15) et à la deuxième borne de puissance (142), et une autre extrémité connectée à l'unité de commande (16) ;
la deuxième borne de puissance étant configurée pour pouvoir transmettre la puissance et les deuxièmes données de communication par répartition dans le temps ; et
l'unité de commande étant configurée pour déterminer, en fonction des premières données de communication et/ou des deuxièmes données de communication, si un chargeur ou l'outil électrique connecté au bloc-batterie possède une borne présentant à la fois des capacités de charge et de communication.

2. Bloc-batterie selon la revendication 1, comprenant en outre un premier interrupteur (Q1) et un deuxième interrupteur (Q2), le premier interrupteur et le deuxième interrupteur étant connectés en série entre la deuxième borne de puissance et le groupe de cellules.

3. Bloc-batterie selon la revendication 2, la deuxième connexion électrique étant activée lorsque le premier interrupteur est à l'état fermé, et la deuxième connexion électrique n'étant pas activée lorsque le premier interrupteur est à l'état ouvert, la puissance et les deuxièmes données de communication pouvant être introduites dans le bloc-batterie par l'intermédiaire de la deuxième borne de puissance lorsque la deuxième connexion électrique est activée, et la puissance ne pouvant pas être introduite dans le bloc-batterie par l'intermédiaire de la deuxième borne de puissance lorsque la deuxième connexion électrique n'est pas activée.

4. Bloc-batterie selon la revendication 2, l'unité de commande étant configurée pour déterminer, en fonction des premières données de communication et/ou des deuxièmes données de communication transmises par le module de communication, si un chargeur connecté au bloc-batterie possède une borne de chargeur adaptée à la deuxième borne de puissance ; et en réponse au fait que le chargeur connecté au bloc-batterie possède la borne de chargeur adaptée à la deuxième borne de puissance, le premier interrupteur et le deuxième interrupteur étant chacun commandés pour être à l'état fermé de sorte que la deuxième connexion électrique soit activée, sinon le premier interrupteur étant commandé pour être à l'état ouvert de sorte que la deuxième connexion électrique ne soit pas activée, la puissance et les deuxièmes données de communication pouvant être introduites dans le bloc-batterie par l'intermédiaire de la deuxième borne de puissance lorsque la deuxième connexion électrique est activée, et la puissance ne pouvant pas être introduite dans le bloc-batterie par l'intermédiaire de la deuxième borne de puissance lorsque la deuxième connexion électrique n'est pas activée.

5. Bloc-batterie selon la revendication 4, le module de communication comprenant : un premier module de communication (171) connecté en communication entre la borne de communication et l'unité de commande pour acquérir les premières données de communication ; et un deuxième module de communication (172) connecté en communication entre la deuxième borne de puissance et l'unité de commande pour acquérir les deuxièmes données de communication.

6. Bloc-batterie selon la revendication 2, le premier interrupteur comprenant soit un élément de commutation de puissance soit un fusible.

7. Bloc-batterie selon la revendication 6, le fusible comprenant un fusible à deux bornes ou un fusible à trois bornes.

8. Bloc-batterie selon la revendication 2, le deuxième interrupteur comprenant un élément de commutation de puissance.

9. Bloc-batterie selon la revendication 1, la première borne de puissance et la deuxième borne de puissance étant des bornes positives.

10. Bloc-batterie selon la revendication 1, le bloc-batterie alimentant un outil électrique lorsqu'une borne de connexion d'outil sur l'outil électrique est connectée à la borne de puissance.

11. Bloc-batterie selon la revendication 1, la fréquence de transmission à laquelle la borne de communication transmet les premières données de communication étant inférieure à la fréquence de transmission à laquelle la deuxième borne de puissance transmet les deuxièmes données de communication.

12. Bloc-batterie selon la revendication 1, la deuxième borne de puissance transmettant uniquement les deuxièmes données de communication lorsque la deuxième connexion électrique n'est pas activée, et la deuxième borne de puissance transmettant la puissance et les deuxièmes données de communication lorsque la deuxième connexion électrique est activée.

13. Bloc-batterie selon la revendication 1, au cours d'une période de transmission, la deuxième borne de puissance transmettant la puissance pendant une première durée t1 puis transmettant les deuxièmes données de communication pendant une deuxième durée t2, et un rapport de la première durée t1 à la deuxième durée t2 étant supérieur ou égal à 0.1 et inférieur à 1.
